# FASCICULE DE BREVET EUROPEEN

(11) **EP 4 472 845 B1**
(45) Date de publication et mention de la délivrance du brevet: **08.04.2026**
(21) Numéro de dépôt: 23701244.8
(22) Date de dépôt: 10.01.2023
(51) Int. Cl.: B60C 11/00, B60C 11/03

(54) **PNEUMATIQUE À MONTÉE RAPIDE EN TEMPÉRATURE**
SCHNELLAUFWÄRMREIFEN
RAPID WARM-UP TYRE

(30) Priorité: 04.02.2022 FR 2200981
(43) Date de publication de la demande: 11.12.2024
(73) Titulaire: COMPAGNIE GENERALE DES ETABLISSEMENTS MICHELIN, 63000 Clermont-Ferrand (FR)
(72) Inventeur: FAVROT, Romain, 63040 Clermont-Ferrand Cedex 09 (FR); MORA, Florian, 63040 Clermont-Ferrand Cedex 09 (FR)
(74) Mandataire: M.F.P. Michelin
(86) Numéro de dépôt international: PCT/EP2023/050479
(87) Numéro de publication internationale: WO 2023/147968

(56) Documents cités:
- FR-A1- 3 094 270
- JP-A- 2000 198 320
- US-B1- 6 540 858
- US-B2- 7 762 296
- US-B2- 9 776 456
- NN: "michelin-power-supermoto-slick", HTTPS://WWW.MICHELIN.DE/MOTORBIKE/TYRES/MICHELIN-POWER-SUPERMOTO-SLICK#SIZES, 21 March 2021 (2021-03-21), michelin.de/motorbike/tyres, pages 1 - 1, XP055939780, Retrieved from the Internet <URL:https://www.michelin.de/motorbike/tyres/michelin-power-supermoto-slick#sizes> [retrieved on 20220707]

## Description

La présente invention concerne un pneumatique et un moule. Par pneumatique, on entend un bandage destiné à former une cavité interne en coopérant avec un élément de support d'un ensemble monté, cette cavité interne étant apte à être pressurisée à une pression supérieure à la pression atmosphérique.

On connait de l'état de la technique des pneumatiques de compétition pour véhicule de compétition automobile et de compétition motocycliste.

Lors des compétitions automobiles ou motocyclistes, les pilotes souhaitent avoir des pneumatiques présentant des performances optimales, notamment d'adhérence, sur toute la durée d'utilisation des pneumatiques, c'est-à-dire depuis le départ de la course ou dès leur montage sur le véhicule et jusqu'à l'arrivée ou jusqu'à leur changement. Un des paramètres essentiels à l'obtention de ces performances optimales est la température du pneumatique qui doit atteindre une valeur dite de fonctionnement garantissant ces performances optimales.

Ainsi, dans certaines courses, préalablement à leur montage sur le véhicule, on augmente la température des pneumatiques par chauffage, par exemple au moyen de dispositifs de chauffage comprenant des couvertures de chauffage que l'on enroule autour des pneumatiques. De tels dispositifs de chauffage sont, d'une part, onéreux et contraignants, et d'autre part, consommateurs d'énergie.

Dans d'autres cas, on n'utilise aucun dispositif de chauffage ce qui conduit à retarder l'atteinte de la température de fonctionnement et donc l'obtention des performances optimales.

L'invention a pour but de permettre l'obtention de performances optimales d'une façon plus économique et écologique ou plus rapidement en course.

Ainsi, l'invention a pour objet un pneumatique pour véhicule automobile ou moto pour sol asphalté comprenant une surface de roulement comprenant une ou plusieurs partie(s) continûment lisse(s), dans lequel la ou chaque partie continûment lisse comprend :
- une pluralité de creux, chaque creux de la pluralité de creux comprenant un fond de creux,
- une pluralité de bosses, chaque bosse de la pluralité de bosses comprenant un sommet de bosse,

les creux de la pluralités de creux et les bosses de la pluralité de bosses sont agencés de sorte que, lorsque la ou chaque partie continûment lisse roule sur un sol, la pression moyenne de sommet de bosse exercée en moyenne par le sol sur les sommets des bosses de la pluralité de bosses est strictement supérieure à la pression moyenne de fond de creux exercée en moyenne par le sol sur les fonds des creux de la pluralité de creux, la pression moyenne de fond de creux étant non nulle,
la pression exercée par le sol sur chaque creux de la pluralité de creux et sur chaque bosse de la pluralité de bosses étant mesurée dans l'aire de contact de la ou chaque partie continûment lisse du pneumatique, le pneumatique roulant à une vitesse égale à 100 mm/sec sous des angles de dérive et de carrossage sensiblement nuls,
   - le pneumatique étant gonflé à une pression de référence égale à 1,6 bars et soumis à une charge de référence égale à 5000 N dans le cas d'un pneumatique pour véhicule automobile,
   - le pneumatique étant gonflé à une pression de référence égale à 1,8 bars et soumis à une charge de référence égale à 1500 N dans le cas d'un pneumatique pour moto.

La pression moyenne de bosses étant strictement supérieure à la pression moyenne de creux, on impose des déformations radiales et tangentielles plus grandes aux bosses que celles qui sont imposées à la surface de roulement d'un pneumatique de l'état de la technique dans lequel la pression moyenne équivalente est sensiblement homogène sur la surface de roulement. En imposant des déformations relativement importantes, on crée localement des surpressions sur les bosses ce qui échauffe le pneumatique selon l'invention. On augmente ainsi rapidement la température du pneumatique, notamment dès les premiers instants de roulage de ce dernier.

Contrairement aux pneumatiques de l'état de la technique dont la ou les parties lisses présentent, dans le plan médian et dans chaque plan para sagittal, un rayon transversal sensiblement constant, les creux de ladite partie lisse du pneumatique selon l'invention présentent un rayon transversal moyen strictement inférieur au rayon transversal moyen des bosses de ladite partie lisse, le rayon transversal étant la distance radiale entre l'axe de rotation et un point de ladite partie lisse. Le rayon transversal moyen étant, pour chaque ensemble de creux et de bosses, la moyenne arithmétique des rayons transversaux de chaque ensemble.

Ainsi, contrairement aux pneumatiques de l'état de la technique qui sont chauffés par des dispositifs de chauffage externes, le pneumatique selon l'invention se chauffe lui-même au contact du sol, permettant alors d'obtenir les performances optimales attendues de façon économique et écologique car sans avoir recours à des dispositifs de chauffage externes coûteux, contraignants et consommateurs d'énergie.

En outre, dans le cas où on n'utiliserait pas de dispositif de chauffage externe, l'invention permet que le pneumatique atteigne plus rapidement sa température de fonctionnement par rapport à un pneumatique de l'état de la technique et donc que le pilote puisse disposer des performances optimales plus rapidement lors du déroulement de la course.

Des pneumatiques de l'état de la techniques sont connus de US6540858B1, US9776456B2, FR3094270A1, US7762296B2, XP055939780 et JP2000198320A.

L'invention ne caractérise pas les surpressions habituellement observées sur les parties axialement extérieures du pneumatique. En effet, du fait de la courbure d'un pneumatique, les parties axialement extérieures forment généralement des creux car ces parties axialement extérieures présentent généralement un rayon transversal moindre que la partie axialement centrale. Ainsi, ces parties axialement extérieures, du seul fait qu'elles présentent des suppressions, ne sauraient, pour cette seule raison, constituer des bosses du pneumatique selon l'invention. Dans le cas où ces parties axialement extérieures formeraient, contrairement à ce qui est généralement observé, des bosses et donc entraineraient des surpression, alors ces parties axialement extérieures formeraient bien entendu des bosses conformément à l'invention.

L'invention s'applique aussi bien à des pneumatiques pour véhicule automobile qu'à des pneumatiques pour moto.

La destination du pneumatique à un sol asphalté, qu'il s'agisse d'un circuit fermé ou d'une route ouverte, est une caractéristique essentielle afin de permettre de créer localement les surpressions sur les bosses. En effet, un sol meuble, par exemple comme de la terre, ne permettrait pas la création de surpressions significatives. Ainsi, des pneumatiques pour rallye terre ne font pas partie de l'invention. En particulier les pneumatique de compétition pour rallye terre ne font pas partie de l'invention.

Bien entendu, l'invention s'applique à un pneumatique tant à l'état neuf qu'à l'état usé, qu'il soit totalement usé ou partiellement usé. Compte tenu de l'invention et de son application, on préfèrera l'utiliser sur un pneumatique à l'état neuf.

La ou chaque partie continûment lisse comprend une pluralité de creux et une pluralité de bosses, c'est-à-dire que la ou chaque partie continûment lisse comprend au moins deux creux et au moins deux bosses. Ainsi, selon les modes de réalisation, la ou l'ensemble des parties continûment lisse(s) comprendront plus ou moins de creux et de bosses. Selon l'orientation et l'agencement des creux et des bosses, on pourra avoir par exemple de 2 à 600 creux et de 2 à 600 bosses sur la ou l'ensemble des parties continûment lisse(s). Dans certains modes de réalisation dans lequel on a un nombre réduit de creux et de bosses, la ou l'ensemble des parties continûment lisse(s) comprend de 2 à 10 creux et de 2 à 10 bosses. Dans d'autres modes de réalisation dans lequel on a un nombre élevé de creux et de bosses, la ou l'ensemble des parties continûment lisse(s) comprend de 10 à 600 creux et de 10 à 600 bosses.

L'homme du métier saura adapter les bosses et les creux en fonction des propriétés de la bande de roulement, notamment de sa rigidité. En effet, plus la bande de roulement est rigide, moins la mise à plat de la bande de roulement est facilitée et plus les surpressions sur les sommets des bosses seront importantes. Ainsi, dans le cas d'une bande de roulement relativement rigide, on privilégiera une amplitude moyenne relativement petite entre les sommets de bosses et les fonds des creux de façon à avoir une surpression suffisante sans qu'elle soit inutilement excessive. Au contraire, plus la bande de roulement est souple, plus la mise à plat de la bande de roulement est facilitée et moins les surpressions sur les sommets des bosses seront importantes. Ainsi, dans le cas d'une bande de roulement relativement souple, on privilégiera une amplitude moyenne d'autant plus élevée entre les sommets de bosses et les fonds des creux que l'on souhaitera avoir une surpression importante.

De préférence, sans que cela ne soit une caractéristique essentielle de l'invention, on optera pour des pneumatiques dont toute aire de contact obtenue dans les conditions précédemment décrites présente au moins 2 creux et 2 bosses.

A partir du moment où deux parties lisses de la surface de roulement sont au moins partiellement jointives et reliée l'une à l'autre par une partie lisse commune, on considèrera que ces parties lisses reliées toutes reliées en elles ne forment qu'une seule et même partie continûment lisse. Au contraire, à partir du moment où deux parties lisses de la surface de roulement sont totalement disjointes l'une de l'autre et séparée l'une de l'autre par une partie non-lisse, on considérera que ces deux parties lisses sont deux parties continûment lisses distinctes.

Une partie lisse est une partie de la surface de roulement ne comprenant aucun élément en relief sur la surface de roulement, notamment aucun témoin d'usure ou aucune découpure. De tels témoins d'usure ou telles découpures forment par exemple une discontinuité ou une rupture brutale de courbure de la surface de roulement.

L'invention s'applique donc à des pneumatiques dont la surface de roulement est constituée d'une seule partie lisse mais également à des pneumatiques dont la surface de roulement comprend une ou plusieurs parties lisses et une ou plusieurs parties non-lisses. Une ou de telle(s) partie(s) non-lisse(s) pourra ou pourront comprendre des éléments en relief, par exemples des témoins d'usure, des découpures d'évacuation ou de stockage de l'eau, des découpures moulées par des évents permettant d'évacuer l'air emprisonné entre le moule de cuisson du pneumatique et la surface de roulement lors du procédé de fabrication du pneumatique ou encore des bavures de moulage. En d'autres termes, chaque partie lisse est dépourvue de ces éléments en relief choisis parmi des témoins d'usure, des découpures d'évacuation ou de stockage de l'eau, des découpures moulées par des évents permettant d'évacuer l'air emprisonné entre le moule de cuisson du pneumatique et la surface de roulement lors du procédé de fabrication du pneumatique ou encore des bavures de moulage.

Les creux de la pluralité de creux du pneumatique n'ont pas pour fonction essentielle l'évacuation ou le stockage de l'eau, ni de fonction essentielle qui puisse être associée à l'évacuation de l'air emprisonné entre le moule de cuisson du pneumatique et la surface de roulement lors du procédé de fabrication du pneumatique.

La surface de roulement est la partie du pneumatique destinée à venir au contact du sol lors du roulage du pneumatique. La surface de la surface de roulement est la valeur de la surface de révolution d'un pneumatique délimitée par les extrémités axiales de la surface de roulement. On pourra par exemple effectuer un relevé de profil pour mesurer cette surface. Pour un pneumatique pour véhicule automobile, on pourra également mesurer la largeur axiale du pneumatique et la multiplier par la circonférence maximale mesurée dans la plan médian du pneumatique.

Dans le cas d'un pneumatique de l'invention, on détermine la ou les surface(s) formée(s) par la ou chaque partie continûment lisse en calculant, sur un pneumatique non gonflé et non chargé, la surface de chacune de cette ou ces partie(s) continûment lisse(s), par exemple par imagerie.

Chaque creux et chaque bosse de la ou chaque partie continûment lisse est définie par rapport à une surface moyenne de révolution d'axe de révolution sensiblement confondu avec l'axe de rotation du pneumatique, la surface moyenne de révolution étant équidistante du fond des creux et du sommet des bosses. Ainsi, toute partie radialement extérieure à la surface moyenne de révolution est une bosse alors que toute partie radialement intérieure à la surface moyenne de révolution est un creux. La ou chaque partie continûment lisse peut donc également comprendre une ou plusieurs parties moyennes sensiblement confondues avec la surface moyenne de révolution.

Les creux ou les bosses pourront présenter des formes variées. Ainsi, on pourra avoir des creux et des bosses présentant un profil arrondi. On pourra également avoir des creux et des bosses présentant un profil présentant des arêtes et/ou des parties rectilignes, par exemple un profil trapézoïdal, les sommets des bosses et les fonds des creux étant alors formées par des profils sensiblement rectilignes.

La pression moyenne de sommet de bosse est égale à la moyenne arithmétique des pressions mesurées sur les sommets des bosses de la ou chaque partie continûment lisse. De façon analogue, la pression moyenne de fond de creux est égale à la moyenne arithmétique des pressions mesurées dans les fonds des creux de la ou chaque partie continûment lisse. Afin de mesurer les pressions des sommets des bosses et des fonds de creux de la ou chaque partie continûment lisse, on pourra utiliser des moyens connus de l'homme du métier, comme décrits par exemple dans WO2017109377 ou bien tels que commercialisés par la société Tekscan, Inc sous l'appellation TireScan CrossDrive System. De préférence, le sol utilisé pour réaliser la mesure sera plan, lisse et rigide comme cela est notamment décrit dans WO2017109377.

On pourrait également, de façon préférentielle, déterminer la pression moyenne de sommet en considérant uniquement les 25% des pressions mesurées les plus élevées sur les sommets des bosses de la ou chaque partie lisse et déterminer la pression moyenne de creux en considérant uniquement les 25% des pressions mesurées les plus basses sur les fonds des creux de la ou chaque partie lisse.

Afin d'éviter les effets de bords, notamment dans le cas où la partie continûment lisse est délimitée au moins en partie par les bords de l'aire de contact du pneumatique, on déterminera les pressions dans une zone centrale de l'aire de contact de la partie continûment lisse. Cette zone centrale présente une largeur axiale égale à 50% de la largeur de ladite partie continûment lisse et centrée axialement sur le plan médian de ladite partie continûment lisse et de longueur égale à 50% de la longueur de ladite partie continûment lisse et centrée longitudinalement sur le plan transversal de ladite partie continûment lisse.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier: une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par surface circonférentielle équatoriale du pneumatique, on entend, dans un plan de coupe méridienne, la surface passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion radiale du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Très préférentiellement, le pneumatique est un pneumatique de compétition. Un pneumatique de compétition présente parfois un marquage le destinant exclusivement à la compétition, par exemple « usage compétition exclusivement » ou « for competition purpose only ».

La plupart des pneumatiques de compétition ne présente pas d'homologation conforme au R30 UNECE, ni R117 UNECE et donc pas de marquage correspondant.

Néanmoins, certains pneumatiques de compétition, notamment certains pneumatiques de rallye, présentent un marquage d'homologation pour le R30 UNECE sans que cela ne permette pour autant d'étendre leur utilisation en dehors de la compétition.

La compétition couvre notamment les évènements officiellement chronométrés et pas le roulage libre sur circuit, connu parfois sous l'appellation « track days » ou « HDPE » (High Driving Performance Events), qui couvre des évènements officiellement non chronométrés.

Dans certains modes de réalisation applicables à la plupart des pneumatiques utilisés en compétition dans lesquels les parties lisses sont relativement importantes, la ou chaque partie continûment lisse forme, en surface, au moins 10%, de préférence au moins 20%, plus préférentiellement au moins 30% et encore plus préférentiellement au moins 40% de la surface de roulement.

Parmi les pneumatiques utilisés en compétition, notamment en compétition sur circuit, on distingue les pneumatiques par leur usage en fonction des conditions météorologiques. Ainsi, on distingue notamment les pneumatiques dits lisses ou « slick » destinés à un usage par temps sec, les pneumatiques dits intermédiaires ou « intermediates » destinés à un usage sur chaussée humide sans temps de pluie et les pneumatiques dits pluies ou « wet » destinés à un usage sur chaussée humide par temps de pluie.

Dans certains modes de réalisation applicables aux pneumatiques lisses, la partie continûment lisse ou l'ensemble des parties continûment lisses forme en surface, au moins 80%, de préférence au moins 90% et plus préférentiellement au moins 95% de la surface de roulement. En d'autres termes, le taux d'entaillement surfacique de la surface de roulement est strictement inférieur à 20%, de préférence à 10% et plus préférentiellement à 5%. En effet, contrairement aux pneumatiques intermédiaires et pluies comprenant une proportion significative d'éléments en relief, notamment des découpures d'évacuation ou de stockage de l'eau, les pneumatiques lisses présentent peu ou pas d'éléments en relief.

Dans d'autres modes de réalisation applicables aux pneumatiques intermédiaires, la partie continûment lisse ou l'ensemble des parties continûment lisses forme en surface, de 80% à 99%, de préférence de 85% à 95% de la surface de roulement. En d'autres termes, le taux d'entaillement surfacique de la surface de roulement va de 1% à 20%, de préférence de 5% à 15%.

Dans encore d'autres modes de réalisation applicables aux pneumatiques pluies, la partie continûment lisse ou l'ensemble des parties continûment lisses forme en surface, de 50% à 80%, de préférence de 70% à 80% de la surface de roulement. En d'autres termes, le taux d'entaillement surfacique de la surface de roulement va de 20% à 50%, de préférence de 20% à 30%.

Afin d'optimiser l'échauffement du pneumatique, le rapport de la pression moyenne de sommet de bosse sur la pression moyenne de fond de creux est supérieur ou égal à 1,5, de préférence supérieur ou égal à 2,0 et plus préférentiellement supérieur ou égal à 2,5.

Afin de ne pas trop pénaliser la mise à plat du pneumatique et donc l'adhérence, le rapport de la pression moyenne de sommet de bosse sur la pression moyenne de fond de creux est inférieur ou égal à 14,0, de préférence inférieur ou égal à 10,0 et plus préférentiellement inférieur ou égal à 7,0.

Dans des modes de réalisation dans lesquels on caractérise géométriquement les bosses et les creux pour optimiser le compromis entre l'échauffement du pneumatique et la mise à plat du pneumatique et donc son adhérence, dans une portion centrale de la surface de roulement présentant une largeur axiale égale à 50% de la largeur axiale de la surface de roulement et axialement centrée sur le plan médian du pneumatique, la distance radiale moyenne entre le sommet de chaque bosse et le fond de chaque creux va de 0,1 mm à 1,5 mm, de préférence de 0,2 à 1,0 mm et plus préférentiellement de 0,3 mm à 0,7 mm. En effet, si la distance radiale moyenne est trop faible, la surpression créée sur chaque bosse permet de chauffer le pneumatique mais de façon relativement lente. Si la distance radiale moyenne est trop grande, la surpression est importante mais cela peut réduire la surface de l'aire de contact et donc l'adhérence du pneumatique. En outre, avec une distance radiale moyenne trop importante, on risque de créer des vibrations ce qui n'est pas souhaitable.

La distance radiale moyenne est calculée en faisant la différence entre la moyenne arithmétique des rayons transversaux du ou des sommet(s) de chaque bosse de la portion centrale et la moyenne arithmétique des rayons transversaux du ou des fond(s) de chaque creux de la portion centrale.

Dans certains modes de réalisation, chaque creux de la pluralité de creux de ladite partie continûment lisse et chaque bosse de la pluralité de bosses de ladite partie continûment lisse s'étend axialement sur au moins 50%, de préférence au moins 80% et plus préférentiellement au moins 90% de la largeur axiale de ladite partie continûment lisse. Ainsi, du fait d'une couverture axiale relativement importante, le pneumatique s'échauffe sur une largeur axiale relativement importante de la ou de chaque partie continûment lisse ce qui contribue à l'obtention des performances optimales sur une surface importante de la surface de roulement.

Dans certains modes de réalisation, les creux de la pluralité de creux sont répartis selon au moins un motif répétitif de creux sur au moins une portion de ladite partie continûment lisse et/ou les bosses de la pluralité de bosses sont réparties selon au moins un motif répétitif de bosses sur au moins une portion de ladite partie continûment lisse.

Par motif, on entend que les creux ou les bosses sont géométriquement sensiblement identiques, c'est-à-dire de dimensions et de formes sensiblement identiques quelle que soit leur répartition les uns/unes par rapport aux autres.

Un motif répétitif est un ensemble de creux ou de bosses géométriquement sensiblement identiques dont la répartition les uns/unes par rapport aux autres est organisée, par opposition à aléatoire, sur ladite partie continûment lisse. Cette répartition bien qu'organisée n'étant pas forcément constante et peut donc être variable. Un exemple de répartition constante est un agencement dans lequel les creux et/ou les bosses sont deux à deux équidistants les uns/unes par rapport aux autres. Un exemple de répartition variable est un agencement dans lequel les creux et/ou les bosses sont deux à deux distantes d'une distance variable, par exemple d'une distance qui croit avec la distance par rapport au plan médian du pneumatique.

Le motif répétitif de creux et le motif répétitif de bosses pourront être identiques ou bien différents, de préférence identiques.

Dans une variante, les creux de la pluralité de creux sont répartis selon :
- un premier motif répétitif de creux sur une première portion de ladite partie continûment lisse, et
- un deuxième motif répétitif de creux, distinct du premier motif répétitif de creux, sur une deuxième portion de ladite partie continûment lisse.

De façon analogue, dans une variante, les bosses de la pluralité de bosses sont réparties selon :
- un premier motif répétitif de bosses sur une première portion de ladite partie continûment lisse, et
- un deuxième motif répétitif de bosses, distinct du premier motif répétitif de bosses, sur une deuxième portion de ladite partie continûment lisse.

Dans une variante préférée, les creux de la pluralité de creux et les bosses de la pluralité de bosses sont répartis selon un unique motif répétitif commun sur au moins une portion de ladite partie continûment lisse.

Dans d'autres modes de réalisation, les creux de la pluralité de creux sont répartis de façon aléatoire sur ladite partie continûment lisse et/ou les bosses de la pluralité de bosses sont réparties de façon aléatoire sur ladite partie continûment lisse.

Avantageusement, sans que cela ne soit essentiel à l'invention, les creux de la pluralité de creux et les bosses la pluralité de bosses sont agencés de façon à former au moins une portion ondulée de ladite partie continûment lisse.

Par portion ondulée, on entend une portion de ladite partie continûment lisse qui comprend des fonds et des sommets qui alternent successivement les uns avec les autres de façon à engendrer plusieurs changements de signe de courbure de la surface de roulement.

Dans une variante, ladite partie continûment lisse est constituée par une portion ondulée. Dans une autre variante, ladite partie continûment lisse comprend une portion ondulée et une portion non-ondulée. Un exemple de portion non-ondulée est une portion plane ou bien une portion à signe de courbure constant, par exemple une portion intégralement concave ou intégralement convexe.

Dans certains modes de réalisation, la ou chaque portion ondulée comprend au moins une ondulation répétitive de ladite surface continûment lisse, la ou chaque ondulation répétitive étant orientée selon une direction principale sensiblement parallèle à la direction de translation d'un creux à l'autre de la pluralité de creux de la portion ondulée ou à la direction de translation d'une bosse à l'autre de la pluralité de bosses de la portion ondulée répartis selon le motif répétitif commun.

Une ondulation comprend plusieurs changements successifs du sens de courbure de ladite surface continûment lisse le long de la direction principale, chaque changement de sens de courbure étant localisé sur un et un seul point d'inflexion agencé le long de la direction principale entre chaque sommet d'une bosse et chaque fond d'un creux successifs.

Une ondulation répétitive correspond à une ondulation entre des creux et des bosses de dimensions et de formes identiques de par le fait que les creux et les bosses définissent un motif répétitif commun.

La direction de l'ondulation répétitive peut être rectiligne ou curviligne. Du fait de son caractère répétitif l'ondulation répétitive peut également être caractérisée par une période constante.

Dans certaines variantes, la portion ondulée comprend une unique ondulation répétitive. Dans d'autres variantes, la portion ondulée comprend des première et deuxième ondulations répétitive présentant respectivement des première et deuxième direction principales différentes l'une de l'autre.

Dans d'autres modes de réalisation, la ou chaque portion ondulée comprend au moins une ondulation aléatoire de ladite surface continûment lisse. Une telle ondulation aléatoire est notamment utilisée dans le cas où les creux de la pluralité de creux et les bosses de la pluralité de bosses ne sont pas répartis selon un unique motif répétitif commun.

Dans des modes de réalisation préférés, la direction principale de la ou chaque ondulation répétitive étant sensiblement rectiligne, la direction principale de la ou chaque ondulation répétitive fait un angle supérieur ou égal à 45°, de préférence supérieur ou égal à 80° avec la direction axiale du pneumatique.

L'angle considéré est bien entendu l'angle le plus petit entre la direction principale et la direction axiale.

L'usure d'un pneumatique, en particulier d'un pneumatique de compétition, étant essentiellement liée aux efforts transversaux particulièrement élevés, il est préférable que la direction d'ondulation soit le moins possible orientée dans le sens de ces efforts transversaux (c'est-à-dire le moins possible orientée selon la direction axiale du pneumatique) de façon à favoriser une usure régulière du pneumatique. En outre, une direction d'ondulation orientée trop proche de la direction axiale du pneumatique engendrerait une perte de la rigidité de dérive initiale du pneumatique.

Dans une variante du mode de réalisation préféré précédent, ladite partie continûment lisse comprend, en moyenne, de 0,10 à 0,40 creux et de 0,10 à 0,40 bosses par cm selon la direction circonférentielle de ladite surface continûment lisse. Pour déterminer le nombre moyen de creux et de bosses par cm selon la direction circonférentielle, on mesure la circonférence du pneumatique sur le plan médian du pneumatique ainsi que les nombres de creux et de bosses dans ladite partie lisse continûment lisse et on rapporte les nombres précédents à un centimètre de la circonférence mesurée.

Dans certains modes de réalisation, la ou chaque ondulation présente préférentiellement une période constante. De façon préférentielle, afin d'éviter tout problème de résonnance, on prendra soin d'éviter que la période de la ou chaque ondulation soit trop proche de la période de résonnance propre de la suspension du véhicule. Dans d'autres modes de réalisation plus complexe, la ou chaque ondulation présente une période variable.

Un autre objet de l'invention est l'utilisation, en compétition ou en roulage libre sur circuit, sur sol asphalté, d'un pneumatique comprenant une surface de roulement comprenant une ou plusieurs partie(s) continûment lisse(s), dans lequel la ou chaque partie continûment lisse comprend :
- une pluralité de creux, chaque creux de la pluralité de creux comprenant un fond de creux,
- une pluralité de bosses, chaque bosse de la pluralité de bosses comprenant un sommet de bosse,
   les creux de la pluralités de creux et les bosses de la pluralité de bosses sont agencés de sorte que, lorsque la ou chaque partie continûment lisse roule sur un sol, la pression moyenne de sommet de bosse exercée en moyenne par le sol sur les sommets des bosses de la pluralité de bosses est strictement supérieure à la pression moyenne de fond de creux exercée en moyenne par le sol sur les fonds des creux de la pluralité de creux, la pression moyenne de fond de creux étant non nulle,
   la pression exercée par le sol sur chaque creux de la pluralité de creux et sur chaque bosse de la pluralité de bosses étant mesurée dans l'aire de contact de la ou chaque partie continûment lisse du pneumatique, le pneumatique roulant à une vitesse égale à 100 mm/sec sous des angles de dérive et de carrossage sensiblement nuls,
- le pneumatique étant gonflé à une pression de référence égale à 1,6 bars et soumis à une charge de référence égale à 5000 N dans le cas d'un pneumatique pour véhicule automobile,
- le pneumatique étant gonflé à une pression de référence égale à 1,8 bars et soumis à une charge de référence égale à 1500 N dans le cas d'un pneumatique pour moto.

Que ce soit en compétition ou en roulage libre sur circuit, l'utilisation couvre notamment la compétition automobile ou motocycliste ou le roulage libre sur circuit automobile ou motocycliste.

La compétition couvre notamment des évènements officiellement chronométrés alors que le roulage libre sur circuit, connu parfois sous l'appellation « track days » ou « HDPE » (High Driving Performance Events), couvre des évènements officiellement non chronométrés.

Un autre objet de l'invention est un moule pour la fabrication d'un pneumatique tel que défini ci-dessus comprenant une surface de moulage de la surface de roulement comprenant une partie de moulage continûment lisse de la ou chaque partie continûment lisse de la surface de roulement, la ou chaque partie de moulage continûment lisse comprend :
- une pluralité de creux de moulage des bosses de la pluralité de bosses de ladite partie continûment lisse de la surface de roulement, et
- une pluralité de bosses de moulage des creux de la pluralité de creux de ladite partie continûment lisse de la surface de roulement.

Dans des modes de réalisation particulièrement avantageux permettant de faciliter l'évacuation de l'air emprisonné entre le moule du pneumatique et la surface de roulement lors du procédé de fabrication du pneumatique, le moule comprend une pluralité d'éléments d'éventation hors du moule de l'air emprisonné entre la surface de moulage et la surface de roulement lorsque le pneumatique est dans le moule, chaque élément d'éventation d'au moins une partie des éléments d'éventation débouche radialement dans un des creux de moulage.

Lors du moulage du pneumatique par le moule, la surface de moulage vient d'abord au contact de la surface de roulement par l'intermédiaire des bosses de moulage puis au contact de la surface de roulement par l'intermédiaire des creux de moulage. L'air emprisonné se concentre donc principalement entre les creux de moulage et la surface de roulement sous forme de poches d'air. En positionnant les éléments d'éventation de sorte qu'ils débouchent dans les creux de moulage, on s'assure qu'ils évacueront l'air emprisonné.

Dans des variantes de moules dans lesquels le moule comprend une pluralité d'éléments individuels de moulage de la surface de roulement apte à coopérer deux à deux selon des plans de joint, chaque plan de joint d'au moins une partie des plans de joint débouche radialement sur un des creux de moulage. Dans ces variantes, on utilise les plans de joint forment les éléments d'éventation.

Optionnellement et très avantageusement, chaque creux de moulage a au moins un élément d'éventation d'au moins une partie des éléments d'éventation débouchant dans ledit creux de moulage. Ainsi, on s'assure que l'air emprisonné dans chaque creux est évacué par un élément d'éventation.

Dans les variantes dans lesquels le moule comprend une pluralité d'éléments individuels de moulage de la surface de roulement apte à coopérer deux à deux selon des plans de joint, chaque creux de moulage a un plan de joint d'au moins une partie des plans de joint débouchant dans ledit creux de moulage.

L'invention sera mieux comprise à la lecture de la description qui va suivre, donnée uniquement à titre d'exemple non limitatif et faite en se référant aux dessins dans lesquels:
- la figure 1 est une vue de face d'un pneumatique de compétition pour véhicule automobile selon un premier mode de réalisation de l'invention,
- la figure 2 est une photographie d'une pile de plusieurs pneumatiques selon le premier mode de réalisation,
- la figure 3 est une vue schématique du pneumatique de la figure 1 dans le plan de coupe III-III' de la figure 1,
- la figure 4 est une vue de détails de la zone IV de la figure 3,
- les figures 5, 6, 7 et 8 sont des vues schématiques du pneumatique de la figure 4 respectivement dans les plans de coupe V-V', VI-VI', VII-VII' et VIII-VIII',
- la figure 9 est une vue schématique illustrant le pneumatique selon le premier mode de réalisation,
- la figure 10 est une vue schématique d'un moule selon l'invention permettant de mouler le pneumatique des figures 1 à 9,
- les figures 11, 12 et 13 sont des vues analogues à celle de la figure 9 de pneumatiques respectivement selon des deuxième, troisième et quatrième modes de réalisation de l'invention,
- la figure 14 est une vue de détails de la zone XIV de la figure 13,
- les figures 15, 16, 17 et 18 sont des vues analogues à celle de la figure 9 de pneumatiques respectivement selon des cinquième, sixième, septième et huitième modes de réalisation de l'invention, et
- la figure 19 est une vue de face d'un pneumatique de compétition pour motocycle selon un mode de réalisation de l'invention.

Sur les figures, on a représenté un repère X, Y, Z correspondant aux directions habituelles respectivement axiale (Y), radiale (Z) et circonférentielle (X) d'un pneumatique.

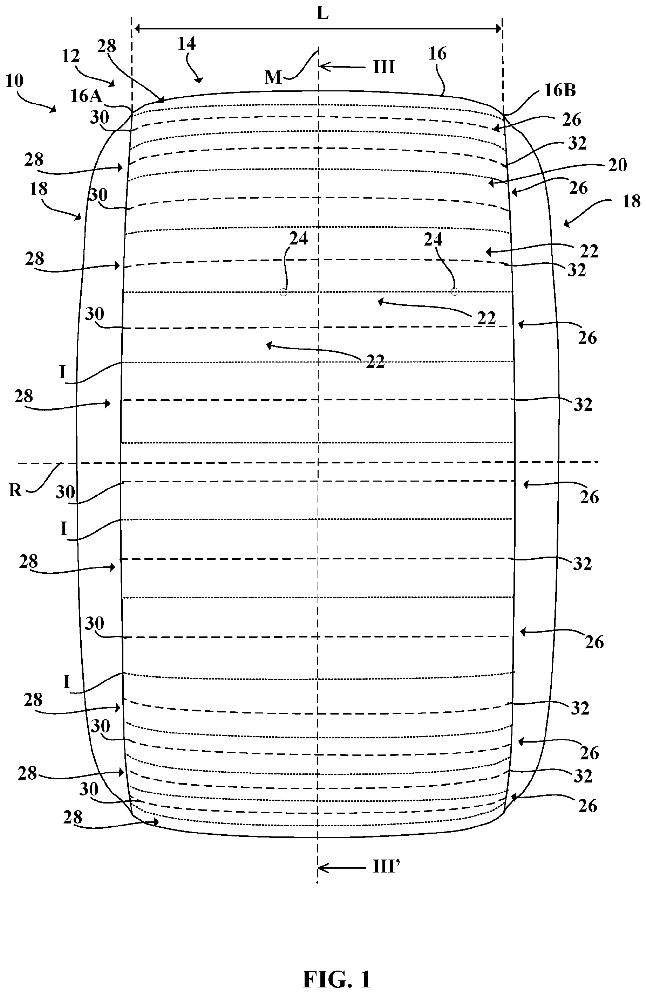

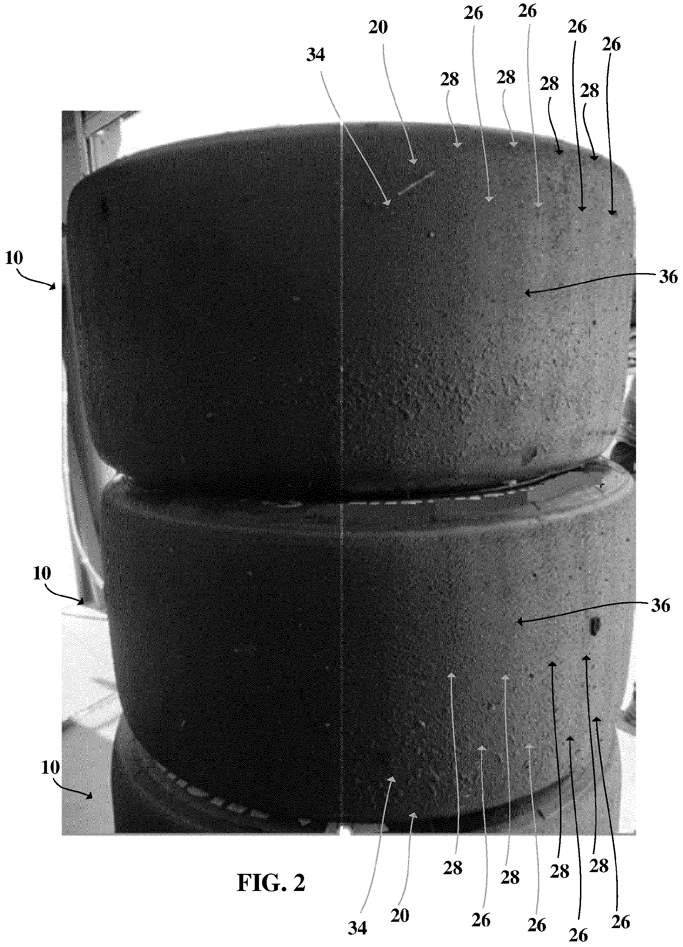

On a représenté sur les figures 1 à 9 un ou plusieurs pneumatiques 10 de compétition pour sol asphalté selon le premier mode de réalisation de l'invention. Le pneumatique 10 présente une forme sensiblement torique autour d'un axe de révolution R sensiblement parallèle à la direction axiale Y. Le pneumatique 10 est un pneumatique de compétition et est destiné à un véhicule automobile et présente les dimensions 30/68 R18. Sur les différentes figures 1 et 3 à 9, le pneumatique 10 est représenté à l'état neuf, c'est-à-dire n'ayant pas encore roulé. Sur la photographie de la figure 2, les pneumatiques sont à l'état partiellement usé car ayant été utilisés en roulage libre sur un circuit présentant un sol asphalté.

En référence à la figure 1, le pneumatique 10 comprend un sommet 12 comprenant une bande de roulement 14 destinée à entrer en contact avec un sol lors du roulage par l'intermédiaire d'une surface de roulement 16. La surface de roulement 16 est délimitée par deux extrémités axiales 16A et 16B définissant une largeur axiale L de surface de roulement. Ici L= 30 cm. Le diamètre dans le plan médian M du pneumatique 10 non chargé et non gonflé est ici égal 68 cm. La surface de la surface de roulement 16 est égale à 6406 cm2.

Le pneumatique comprend deux flancs 18 prolongeant le sommet 12 radialement vers l'intérieur. Le pneumatique 10 comporte en outre deux bourrelets radialement intérieurs aux flancs 18 destinés à permettre l'accrochage du pneumatique 10 sur un support de montage, par exemple une jante. Chaque flanc 18 relie chaque bourrelet au sommet 12.

La surface de roulement 16 du pneumatique 10 selon le premier mode de réalisation comprend une partie continûment lisse 20 et une pluralité de parties non-lisses 22, ici huit parties non-lisses 22 dont deux sont visibles sur la figure 1. En l'espèce, chaque partie non-lisse 22 comprend un témoin d'usure 24 sous la forme d'un puit de diamètre égal à 2,5 mm et de profondeur comprise entre 2 et 5 mm.

La ou chaque partie continûment lisse 20 forme, en surface, au moins 10%, de préférence au moins 20%, plus préférentiellement au moins 30% et encore plus préférentiellement au moins 40% de la surface de roulement 16.

S'agissant d'un pneumatique lisse comprenant une unique partie continûment lisse 20, la partie continûment lisse 20 forme, en surface, au moins 80%, de préférence au moins 90% et plus préférentiellement au moins 95% de la surface de roulement 16. En l'espèce, la partie continûment lisse 20 forme, en surface, plus de 99% de la surface de roulement 16.

En référence aux figures 1, 2, 3 et 9, la partie continûment lisse 20 comprend une pluralité de creux 26 et une pluralité de bosses 28. Chaque creux 26 de la pluralité de creux comprend un fond 30 correspondant à la partie de chaque creux 26 présentant le rayon transversal RT le plus petit, ici RTI. Chaque bosse 28 de la pluralité de bosses comprend un sommet 32 correspondant à la partie de chaque bosse 28 présentant le rayon transversal RT le plus grand, ici RTE.

Chaque creux 26 de la pluralité de creux de la partie continûment lisse 20 et chaque bosse 28 de la pluralité de bosses de la partie continûment lisse 20 s'étend axialement sur au moins 50%, de préférence au moins 80% et plus préférentiellement au moins 90% et ici sur 100% de la largeur axiale L de la partie continûment lisse 20.

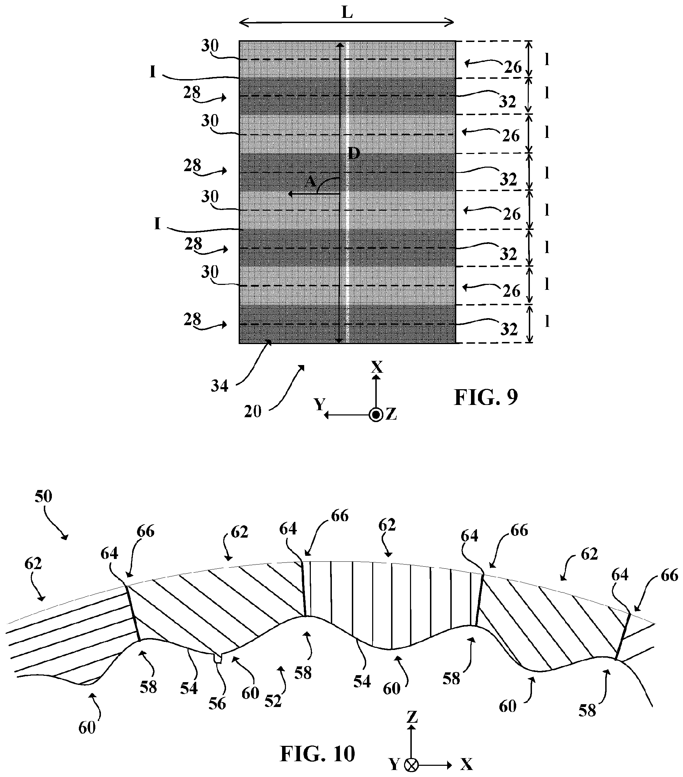

Les creux 26 de la pluralité de creux et les bosses 28 de la pluralité de bosses sont répartis selon un unique motif répétitif commun sur au moins une portion de la partie continûment lisse 20, ici sur l'intégralité de la partie continûment lisse 20. En l'espèce et comme représenté de façon schématique sur la figure 9, le motif répétitif commun est une bande de largeur axiale sensiblement égale à la largeur axiale L de la surface de roulement 16 et de longueur curviligne circonférentielle I égale à 26, 7 mm.

La partie continûment lisse 20 comprend de 2 à 600 creux et de 2 à 600 bosses, ici de 10 à 600 creux et de 10 à 600 bosses sur la partie continûment lisse 20 et en l'espèce 40 creux et 40 bosses sur la partie continûment lisse 20. La partie continûment lisse 20 comprend, en moyenne, de 0,10 à 0,40 creux et de 0,10 à 0,40 bosses par cm selon la direction circonférentielle X de la surface continûment lisse 20, et ici en moyenne 0,18 creux et 0,18 bosses par cm.

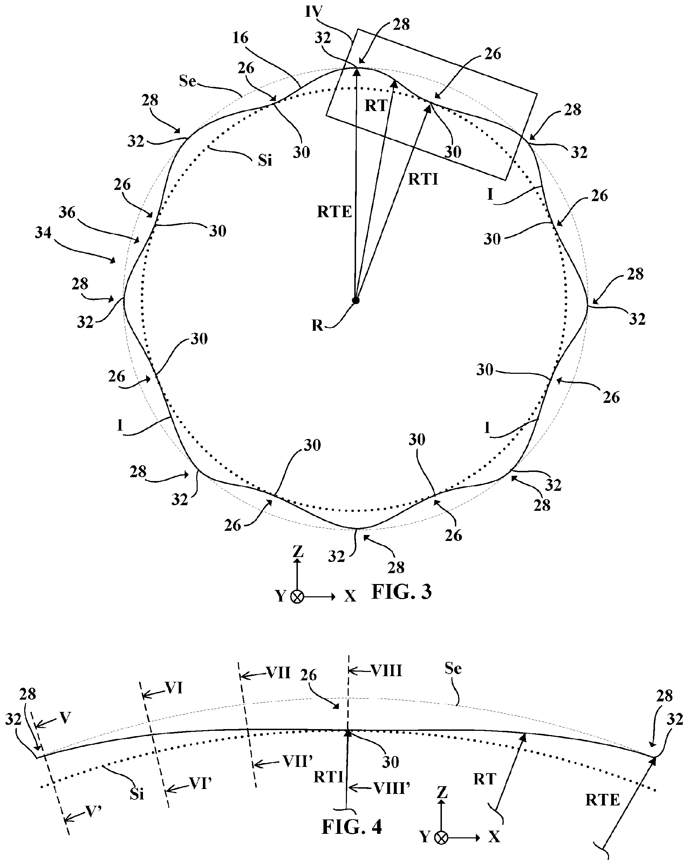

Ainsi, comme cela est visible sur la photographie de la figure 2 et illustré sur la figure 3, les creux 26 de la pluralité de creux et les bosses 28 la pluralité de bosses sont agencés de façon à former une portion ondulée 34 de la partie continûment lisse 20. En l'espèce, la partie continûment lisse 20 comprend la portion ondulée 34 et ici est constituée par la portion ondulée 34.

Ici, la portion ondulée 34 comprend une unique ondulation répétitive 36 de la surface continûment lisse 20. L'ondulation répétitive 36 est orientée selon une direction principale D sensiblement parallèle à la direction de translation d'un creux 26 à l'autre de la pluralité de creux de la portion ondulée 34 ou à la direction de translation d'une bosse 28 à l'autre de la pluralité de bosses de la portion ondulée 34. La direction principale D de l'ondulation répétitive 36 est ici rectiligne et fait un angle A supérieur ou égal à 45°, de préférence supérieur ou égal à 80°, ici sensiblement égale à 90° avec la direction axiale Y du pneumatique 10. L'ondulation répétitive 36 présente ici une période constante. Sur les figures 1, 3 et 9, on a représenté schématiquement les lignes d'inflexion I de l'ondulation répétitive 36 délimitant chaque creux 26 et chaque bosse 28.

Comme cela est représenté sur les figures 3 à 8, la portion ondulée 34 de la partie continûment lisse 20 est radialement comprise entre une surface de révolution radialement extérieure Se d'axe de révolution sensiblement confondu avec l'axe de rotation R du pneumatique 10 et une surface de révolution radialement intérieure Si d'axe de révolution sensiblement confondu avec l'axe de rotation R du pneumatique 10.

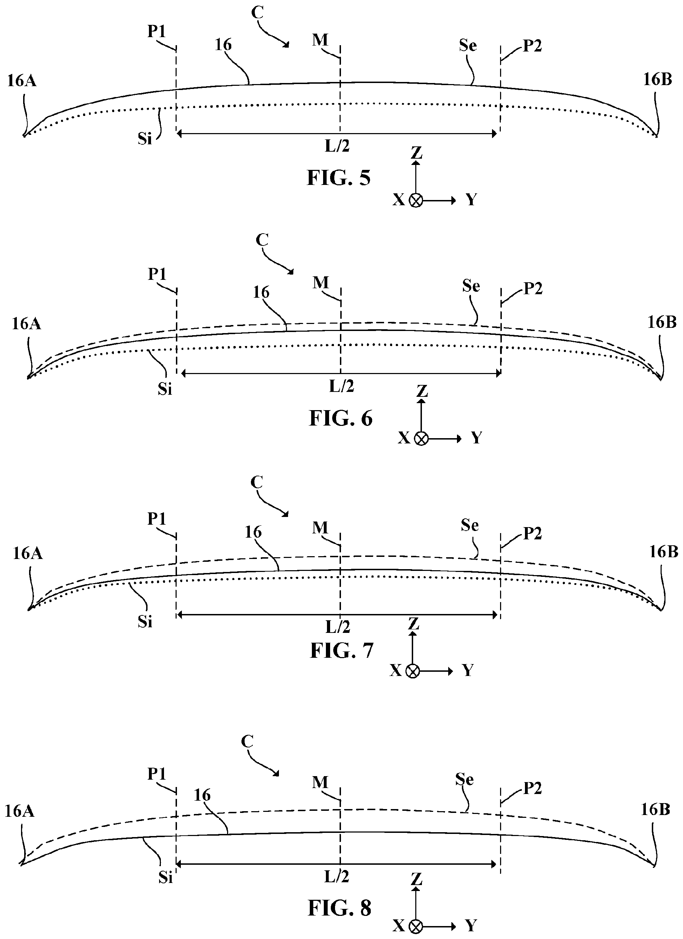

La surface de révolution radialement extérieure Se passe par les sommets 32 des bosses 28 de la pluralité de bosses de la partie continûment lisse 20 et la surface de révolution radialement intérieure Si passe par les fonds 30 des creux 26 de la pluralité de creux de la partie continûment lisse 20. Sur les figures 5 à 8, on a représenté le plan médian M ainsi que les deux plans para-sagittaux P1 et P2 délimitant une portion centrale C présentant une largeur axiale L/2 égale à 50% de la largeur axiale L de la surface de roulement 16, les plans para-sagittaux P1 et P2 étant équidistants du plan médian M.

La distance radiale moyenne entre le sommet 32 de chaque bosse 28 et le fond 30 de chaque creux 26 de la partie continûment lisse 20 va de 0,1 mm à 1,5 mm, de préférence de 0,2 à 1,0 mm et plus préférentiellement de 0,3 mm à 0,7 mm et ici est égale à 0,5 mm.

Les creux 26 de la pluralité de creux et les bosses 28 de la pluralité de bosses sont agencés de sorte que, lorsque la partie continûment lisse 20 roule sur un sol, la pression moyenne Pb exercée en moyenne par le sol sur les sommets 32 des bosses 28 de la pluralité de bosses, appelée pression moyenne de sommet de bosse, est strictement supérieure à la pression moyenne Pc exercée en moyenne par le sol sur les fonds 30 des creux 26 de la pluralité de creux, appelée pression moyenne de fond de creux. Les pressions exercées par le sol sur chaque creux 26 de la pluralité de creux et sur chaque bosse 28 de la pluralité de bosses sont mesurées dans l'aire de contact de la partie continûment lisse 20 du pneumatique 10 gonflé à une pression de référence égale à 1,6 bars et soumis à une charge de référence égale à 5000 N et roulant à une vitesse égale à 100 mm/sec sous des angles de dérive et de carrossage sensiblement nuls. En l'espèce, Pb=3,0 bars et Pc=1,0 bar. Ici, toute aire de contact du pneumatique 10 obtenue dans les conditions précédentes présente au moins 2 creux et 2 bosses.

Le rapport de la pression moyenne de sommet de bosse Pb sur la pression moyenne de fond de creux Pc est supérieur ou égal à 1,5, de préférence à 2,0 et plus préférentiellement à 2,5 et inférieur ou égal à 14,0, de préférence inférieur ou égal à 10,0 et plus préférentiellement inférieur ou égal à 7,0. Ici Pb/Pc=3,0.

On a représenté sur la figure 10 un moule 50 pour la fabrication du pneumatique 10 décrit ci-dessus. Le moule 50 comprend une surface de moulage 52 complémentaire de la surface de roulement 16 comprenant une partie de moulage continûment lisse 54 de la partie continûment lisse 20 ainsi qu'une partie de moulage non-lisse 56 des parties non-lisses 22. La partie de moulage continûment lisse 54 comprend une pluralité de creux 58 de moulage des bosses 28 de la pluralité de bosses ainsi qu'une pluralité de bosses 60 de moulage des creux 26 de la pluralité de creux.

Le moule 50 comprend une pluralité d'éléments individuels 62 de moulage de la surface de roulement 16 apte à coopérer deux à deux selon des plans de joint 64.

Le moule 50 comprend une pluralité d'éléments d'éventation 66 hors du moule de l'air emprisonné entre la surface de moulage 52 et la surface de roulement 16 lorsque le pneumatique 10 est dans le moule 50. La pluralité d'éléments d'éventation 66 comprend une partie d'éléments d'éventation 66 comprenant les plans de joints 64. Chaque plan de joint 64 débouche radialement sur un des creux 58 de moulage et chaque creux de moulage 58 a un plan de joint 64 débouchant dans ledit creux 58 de moulage. On pourra également envisager que la pluralité d'éléments d'éventation 66 comprend une autre partie d'éléments d'éventation 66 comprenant des canaux d'évacuation ménagés dans chacun des éléments individuels 62 (non représentés).

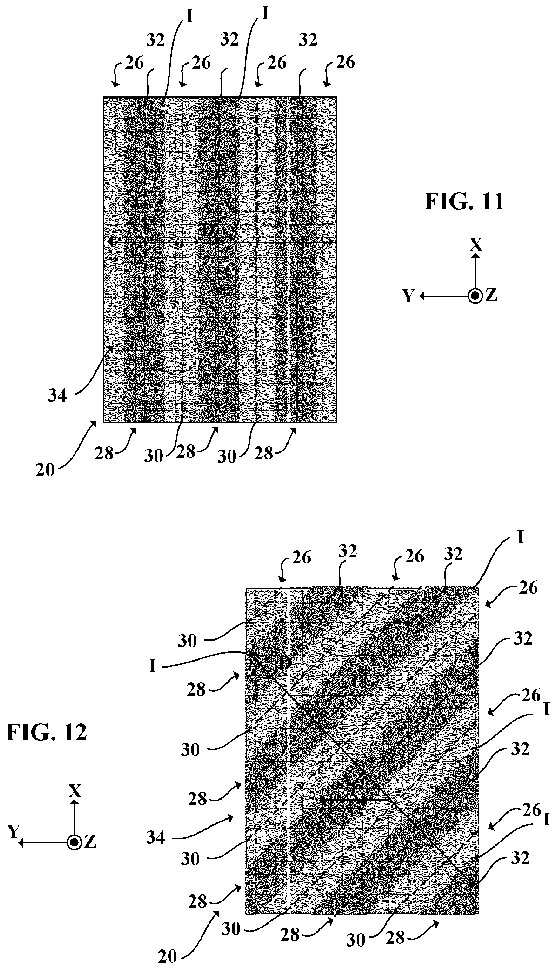

On va maintenant décrire des pneumatiques de compétition pour véhicule automobile de compétition selon des deuxième à huitième modes de réalisation en référence aux figures 11 à 18. Les éléments analogues à ceux décrits en référence au premier mode de réalisation sont désignés par des références identiques.

Dans le deuxième mode de réalisation illustré sur la figure 11 et à la différence du premier mode de réalisation, l'ondulation répétitive 36 est orientée selon une direction principale D faisant un angle A sensiblement nul avec la direction axiale Y.

Dans le troisième mode de réalisation illustré sur la figure 12 et à la différence du premier mode de réalisation, l'ondulation répétitive 36 est orientée selon une direction principale D faisant un angle A égal à 45° avec la direction axiale Y.

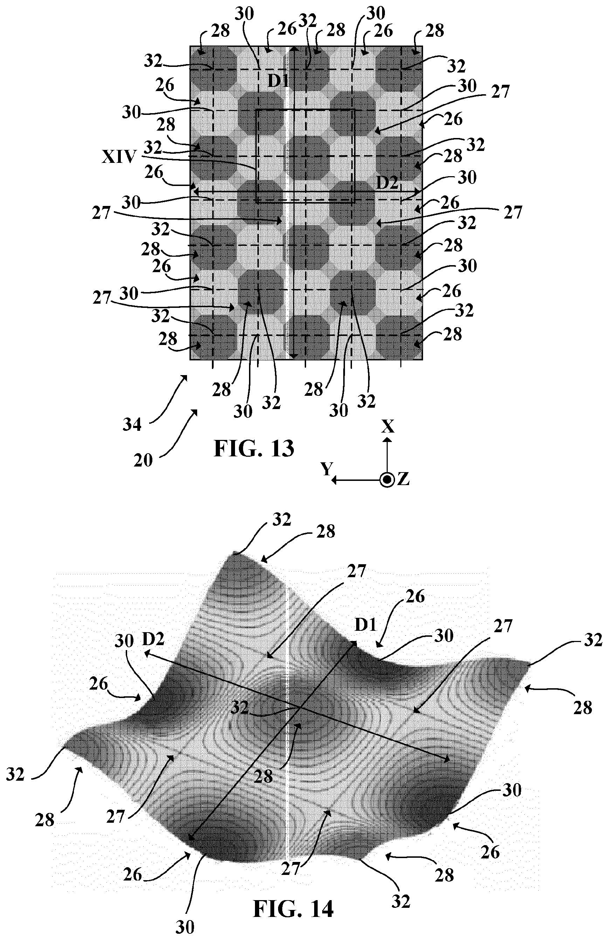

Dans le quatrième mode de réalisation illustré sur les figures 13 et 14 et à la différence du premier mode de réalisation, la portion ondulée 34 comprend des première et deuxième ondulations répétitives. La première ondulation répétitive est, de façon analogue au premier mode de réalisation, orientée selon une direction principale D1 faisant un angle sensiblement égal à 90° avec la direction axiale Y. La deuxième ondulation répétitive est, de façon analogue au deuxième mode de réalisation, orientée selon une direction principale D2, différente de la direction principale D1 et faisant un angle sensiblement nul avec la direction axiale Y. En outre, en plus des creux 26 et des sommets 28, la portion ondulée 34 comporte des portions médianes 27 suivant une surface de révolution médiane d'axe de révolution sensiblement confondu avec l'axe de rotation R du pneumatique 10, la surface de révolution médiane étant sensiblement équidistante des surfaces de révolution radialement intérieure Si et radialement extérieure Se.

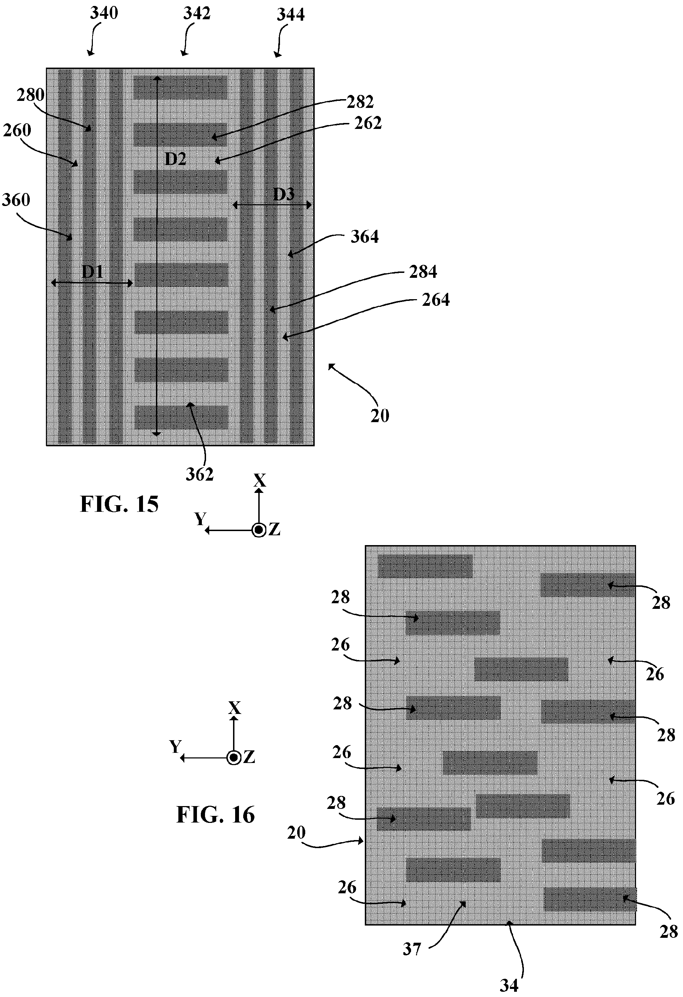

Dans le cinquième mode de réalisation illustré sur la figure 15 et à la différence du premier mode de réalisation, la surface continûment lisse 20 comprend des première, deuxième et troisième portions ondulées respectivement désignées par les références 340, 342, 344.

Les creux 26 de la pluralité de creux sont répartis respectivement selon un premier, deuxième et troisième motif répétitif de creux sur chaque première, deuxième et troisième portion ondulée 340, 342 et 344. Les bosses 28 de la pluralité de bosses sont réparties respectivement selon un premier, deuxième et troisième motif répétitif de bosses sur chaque première, deuxième et troisième portion ondulée 340, 342 et 344, identique respectivement à chaque premier, deuxième et troisième motif répétitif de creux. Ainsi, les creux 26 de la pluralité de creux et les bosses 28 de la pluralité de bosses sont répartis selon un premier, deuxième et troisième motif répétitif commun sur respectivement sur chaque première, deuxième et troisième portion ondulée 340, 342, 344 de la partie continûment lisse 20.

Chaque première et troisième portion ondulée 340, 344 comprend une ondulation répétitive 360, 364 orientée selon une direction principale respectivement D1, D3 faisant un angle sensiblement nul avec la direction axiale Y. La deuxième portion ondulée 342 comprend une ondulation répétitive 362 orientée selon une direction principale D2 faisant un angle sensiblement égal à 90° avec la direction axiale Y.

Dans le sixième mode de réalisation illustré sur la figure 16 et à la différence du premier mode de réalisation, seules les bosses 28 de la pluralité de bosses sont réparties selon un motif répétitif de bosses sur la partie continûment lisse 20. Les creux 26 de la pluralité de creux sont, répartis de façon aléatoire sur la partie continûment lisse 20. La portion ondulée 34 comprend donc une ondulation aléatoire 37.

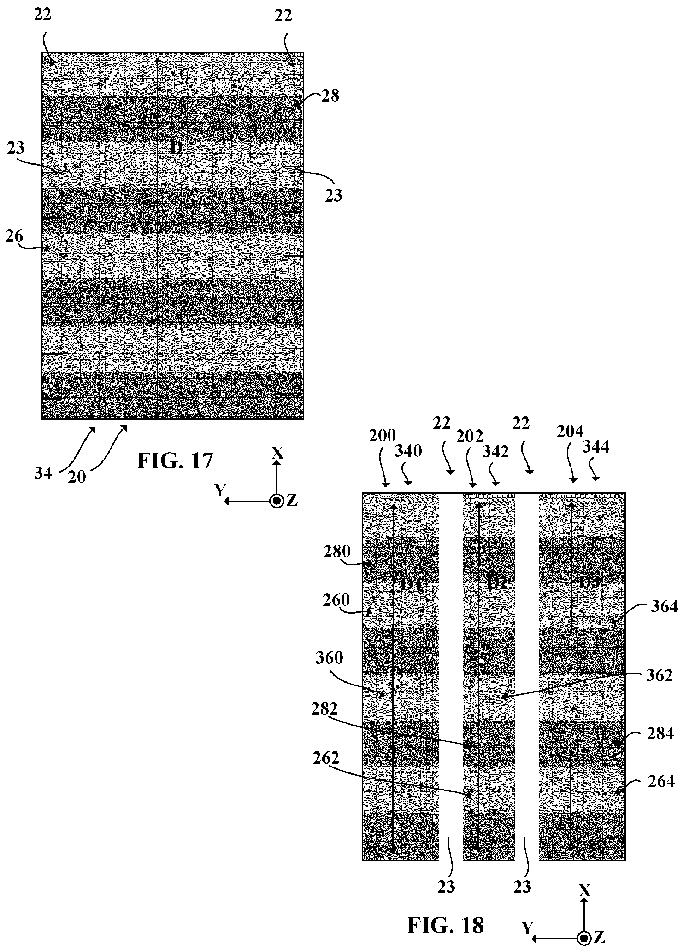

Dans le septième mode de réalisation illustré sur la figure 17 et à la différence du premier mode de réalisation, chaque partie non-lisse 22 comprend non pas des témoins d'usure mais des découpures 23, en l'espèce, des découpures moulées par des évents permettant d'évacuer l'air emprisonné entre le moule de cuisson du pneumatique et la surface de roulement 16 lors du procédé de fabrication du pneumatique.

Dans le huitième mode de réalisation illustré sur la figure 18 et à la différence du premier mode de réalisation, la surface de roulement 16 comprend des première, deuxième et troisième parties continûment lisses 200, 202, 204. Les creux 260, 262, 264 de la pluralité de creux et les bosses 280, 282, 284 de la pluralité de bosses de chaque première, deuxième et troisième partie continûment lisse 200, 202, 204 sont respectivement agencés de façon à former une première, deuxième et troisième portion ondulée 340, 342, 344 de chaque première, deuxième et troisième parties continûment lisses 200, 202, 204. Chaque première, deuxième et troisième portion ondulée 340, 342, 344 comprend respectivement une ondulation répétitive 360, 362 et 364 orientée selon une direction principale respectivement D1, D2, D3 faisant un angle sensiblement égal à 90° avec la direction axiale Y.

En outre, la surface de roulement 16 comprend des parties non-lisse 22 comprenant non pas des témoins d'usure mais des découpures 23, en l'espèce, des découpures d'évacuation ou de stockage de l'eau comprenant ici, des découpures circonférentielles.

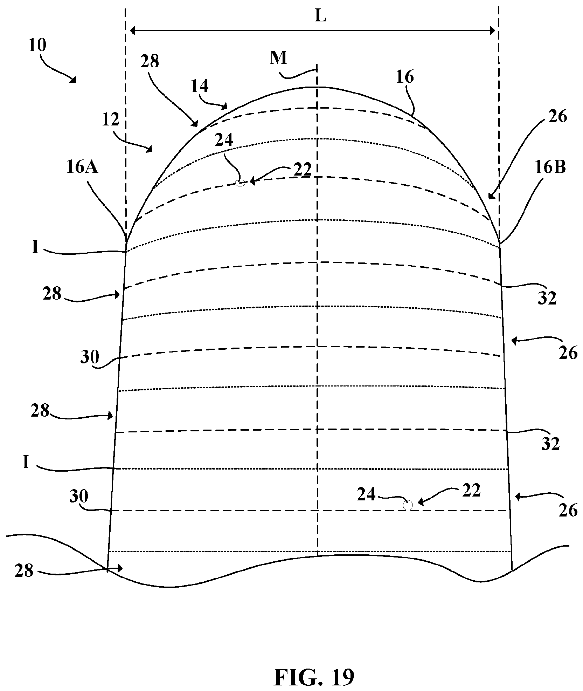

Sur la figure 19, on a représenté de façon schématique un pneumatique 10 de compétition pour moto selon l'invention analogue au pneumatique 19 de compétition pour véhicule automobile selon le premier mode de réalisation. Dans le cas du pneumatique 10 de la figure 19, on caractérise le pneumatique 10 roulant à une vitesse égale à 100 mm/sec sous des angles de dérive et de carrossage sensiblement nuls, le pneumatique 10 étant gonflé à une pression de référence égale à 1,8 bars et soumis à une charge de référence égale à 1500 N.

Dans tous les modes de réalisation précédemment décrit et conformément à l'invention, les pneumatiques sont utilisés en compétition ou en roulage libre sur circuit sur un sol asphalté.

L'invention ne se limite pas aux modes de réalisation décrits précédemment.

## Revendications

1. Pneumatique (10) pour véhicule automobile ou moto pour sol asphalté comprenant une surface de roulement (16) comprenant une ou plusieurs partie(s) continûment lisse(s) (20),
la ou chaque partie continûment lisse (20) comprend :
- une pluralité de creux (26), chaque creux (26) de la pluralité de creux comprenant un fond (30) de creux,
- une pluralité de bosses (28), chaque bosse (28) de la pluralité de bosses comprenant un sommet (32) de bosse,
**caractérisé en ce que**
les creux (26) de la pluralités de creux et les bosses (28) de la pluralité de bosses sont agencés de sorte que, lorsque la ou chaque partie continûment lisse (20) roule sur un sol, la pression moyenne de sommet de bosse (Pb) exercée en moyenne par le sol sur les sommets (32) des bosses (28) de la pluralité de bosses est strictement supérieure à la pression moyenne de fond de creux (Pc) exercée en moyenne par le sol sur les fonds (30) des creux (26) de la pluralité de creux, la pression moyenne de fond de creux (Pc) étant non nulle,
la pression exercée par le sol sur chaque creux (26) de la pluralité de creux et sur chaque bosse (28) de la pluralité de bosses étant mesurée dans l'aire de contact de la ou chaque partie continûment lisse (20) du pneumatique (10), le pneumatique (10) roulant à une vitesse égale à 100 mm/sec sous des angles de dérive et de carrossage sensiblement nuls,
- le pneumatique (10) étant gonflé à une pression de référence égale à 1,6 bars et soumis à une charge de référence égale à 5000 N dans le cas d'un pneumatique (10) pour véhicule automobile,
- le pneumatique (10) étant gonflé à une pression de référence égale à 1,8 bars et soumis à une charge de référence égale à 1500 N dans le cas d'un pneumatique (10) pour moto.

2. Pneumatique (10) selon la revendication précédente, dans lequel la ou chaque partie continûment lisse (20) forme, en surface, au moins 10%, de préférence au moins 20%, plus préférentiellement au moins 30% et encore plus préférentiellement au moins 40% de la surface de roulement (16).

3. Pneumatique (10) selon l'une quelconque des revendications précédentes, dans lequel la partie continûment lisse ou l'ensemble des parties continûment lisses forme en surface, au moins 80%, de préférence au moins 90% et plus préférentiellement au moins 95% de la surface de roulement (16).

4. Pneumatique (10) selon l'une quelconque des revendications précédentes, dans lequel le rapport de la pression moyenne de sommet de bosse (Pb) sur la pression moyenne de fond de creux (Pc) est supérieur ou égal à 1,5, de préférence supérieur ou égal à 2,0 et plus préférentiellement supérieur ou égal à 2,5.

5. Pneumatique (10) selon l'une quelconque des revendications précédentes, dans lequel le rapport de la pression moyenne de sommet de bosse (Pb) sur la pression moyenne de fond de creux (Pc) est inférieur ou égal à 14,0, de préférence inférieur ou égal à 10,0 et plus préférentiellement inférieur ou égal à 7,0.

6. Pneumatique (10) selon l'une quelconque des revendications précédentes, dans lequel chaque creux (26) de la pluralité de creux de ladite partie continûment lisse (20) et chaque bosse (28) de la pluralité de bosses de ladite partie continûment lisse (20) s'étend axialement sur au moins 50%, de préférence au moins 80% et plus préférentiellement au moins 90% de la largeur axiale (L) de ladite partie continûment lisse (20).

7. Pneumatique (10) selon l'une quelconque des revendications précédentes, dans lequel les creux (26) de la pluralité de creux sont répartis selon au moins un motif répétitif de creux sur au moins une portion de ladite partie continûment lisse (20) et/ou les bosses (28) de la pluralité de bosses sont réparties selon au moins un motif répétitif de bosses sur au moins une portion de ladite partie continûment lisse (20).

8. Pneumatique (10) selon l'une quelconque des revendications précédentes, dans lequel les creux (26) de la pluralité de creux et les bosses (28) de la pluralité de bosses sont répartis selon un unique motif répétitif commun sur au moins une portion de ladite partie continûment lisse (20).

9. Pneumatique (10) selon l'une quelconque des revendications précédentes, dans lequel les creux (26) de la pluralité de creux et les bosses (28) la pluralité de bosses sont agencés de façon à former au moins une portion ondulée (34) de ladite partie continûment lisse (20).

10. Pneumatique (10) selon les revendications 8 et 9 prises en combinaison, dans lequel, la ou chaque portion ondulée (34) comprend au moins une ondulation répétitive (36) de ladite surface continûment lisse (20), la ou chaque ondulation répétitive (36) étant orientée selon une direction principale (D, D1, D2) sensiblement parallèle à la direction de translation d'un creux (26) à l'autre de la pluralité de creux de la portion ondulée (34) ou à la direction de translation d'une bosse (28) à l'autre de la pluralité de bosses de la portion ondulée (34) répartis selon le motif répétitif commun.

11. Pneumatique (10) selon la revendication précédente, dans lequel la direction principale (D, D1, D2) de la ou chaque ondulation répétitive (36) étant sensiblement rectiligne, la direction principale (D, D1, D2) de la ou chaque ondulation répétitive (36) fait un angle (A) supérieur ou égal à 45°, de préférence supérieur ou égal à 80° avec la direction axiale (Y) du pneumatique (10).

12. Utilisation, en compétition ou en roulage libre sur circuit, sur sol asphalté, d'un pneumatique (10) pour véhicule automobile ou moto comprenant une surface de roulement (16) comprenant une ou plusieurs partie(s) continûment lisse(s) (20), la ou chaque partie continûment lisse (20) comprend :
- une pluralité de creux (26), chaque creux (26) de la pluralité de creux comprenant un fond (30) de creux,
- une pluralité de bosses (28), chaque bosse (28) de la pluralité de bosses comprenant un sommet (32) de bosse,
les creux (26) de la pluralités de creux et les bosses (28) de la pluralité de bosses sont agencés de sorte que, lorsque la ou chaque partie continûment lisse (20) roule sur un sol, la pression moyenne de sommet de bosse (Pb) exercée en moyenne par le sol sur les sommets (32) des bosses (28) de la pluralité de bosses est strictement supérieure à la pression moyenne de fond de creux (Pc) exercée en moyenne par le sol sur les fonds (30) des creux (26) de la pluralité de creux, la pression moyenne de fond de creux (Pc) étant non nulle,
la pression exercée par le sol sur chaque creux (26) de la pluralité de creux et sur chaque bosse (28) de la pluralité de bosses étant mesurée dans l'aire de contact de la ou chaque partie continûment lisse (20) du pneumatique (10), le pneumatique (10) roulant à une vitesse égale à 100 mm/sec sous des angles de dérive et de carrossage sensiblement nuls,
- le pneumatique (10) étant gonflé à une pression de référence égale à 1,6 bars et soumis à une charge de référence égale à 5000 N dans le cas d'un pneumatique (10) pour véhicule automobile,
- le pneumatique (10) étant gonflé à une pression de référence égale à 1,8 bars et soumis à une charge de référence égale à 1500 N dans le cas d'un pneumatique (10) pour moto.

13. Moule (50) pour la fabrication d'un pneumatique (10) selon l'une quelconque des revendications 1 à 11, comprenant une surface (52) de moulage de la surface de roulement (16) comprenant une partie de moulage continûment lisse (54) de la ou chaque partie continûment lisse (20) de la surface de roulement (16), la ou chaque partie de moulage continûment lisse (54) comprend :
- une pluralité de creux (58) de moulage des bosses (28) de la pluralité de bosses de ladite partie continûment lisse (20) de la surface de roulement (16), et
- une pluralité de bosses (60) de moulage des creux (26) de la pluralité de creux de ladite partie continûment lisse (20) de la surface de roulement (16).

14. Moule (50) selon la revendication précédente, comprenant une pluralité d'éléments d'éventation (66) hors du moule de l'air emprisonné entre la surface de moulage (52) et la surface de roulement (16) lorsque le pneumatique (10) est dans le moule (50), chaque élément d'éventation (64) d'au moins une partie des éléments d'éventation (66) débouche radialement dans un des creux (58) de moulage.

15. Moule (50) selon la revendication précédente, dans lequel chaque creux (58) de moulage a au moins un élément d'éventation (64) d'au moins une partie des éléments d'éventation (66) débouchant dans ledit creux (58) de moulage.

## Patentansprüche

1. Reifen (10) für ein Kraftfahrzeug oder ein Motorrad, für Asphaltboden, beinhaltend eine Lauffläche (16), die einen oder mehrere durchgehend glatte Teile (20) beinhaltet, wobei der oder jeder durchgehend glatte Teil (20) Folgendes beinhaltet:
- eine Vielzahl von Vertiefungen (26), wobei jede Vertiefung (26) der Vielzahl von Vertiefungen einen Vertiefungsgrund (30) beinhaltet,
- eine Vielzahl von Erhebungen (28), wobei jede Erhebung (28) der Vielzahl von Erhebungen einen Erhebungsscheitel (32) beinhaltet,
**dadurch gekennzeichnet, dass**
die Vertiefungen (26) der Vielzahl von Vertiefungen und die Erhebungen (28) der Vielzahl von Erhebungen so angeordnet sind, dass, wenn der oder jeder durchgehend glatte Teil (20) auf einem Boden rollt, der mittlere Erhebungsscheiteldruck (Pb), der durch den Boden im Mittel auf die Scheitel (32) der Erhebungen (28) der Vielzahl von Erhebungen ausgeübt wird, strikt größer ist als der mittlere Vertiefungsgrunddruck (Pc), der durch den Boden im Mittel auf die Gründe (30) der Vertiefungen (26) der Vielzahl von Vertiefungen ausgeübt wird, wobei der mittlere Vertiefungsgrunddruck (Pc) ungleich Null ist,
wobei der Druck, der durch den Boden auf jede Vertiefung (26) der Vielzahl von Vertiefungen und auf jede Erhebung (28) der Vielzahl von Erhebungen ausgeübt wird, in dem Kontaktbereich des oder jedes durchgehend glatten Teils (20) des Reifens (10) gemessen wird, während der Reifen (10) mit einer Geschwindigkeit von 100 mm/s und mit einem Schräglauf- und einem Sturzwinkel von im Wesentlichen Null rollt,
- wobei der Reifen (10), im Fall eines Reifens (10) für ein Kraftfahrzeug, auf einen Referenzdruck von 1,6 bar aufgepumpt ist und einer Referenzlast von 5000 N ausgesetzt ist,
- wobei der Reifen (10), im Fall eines Reifens (10) für ein Motorrad, auf einen Referenzdruck von 1,8 bar aufgepumpt ist und einer Referenzlast von 1500 N ausgesetzt ist.

2. Reifen (10) nach dem vorhergehenden Anspruch, wobei der oder jeder durchgehend glatte Teil (20) an der Oberfläche mindestens 10 %, vorzugsweise mindestens 20 %, bevorzugter mindestens 30 % und noch bevorzugter mindestens 40 % der Lauffläche (16) bildet.

3. Reifen (10) nach einem der vorhergehenden Ansprüche, wobei der durchgehend glatte Teil oder die Gesamtheit der durchgehend glatten Teile an der Oberfläche mindestens 80 %, vorzugsweise mindestens 90 % und bevorzugter mindestens 95 % der Lauffläche (16) bildet.

4. Reifen (10) nach einem der vorhergehenden Ansprüche, wobei das Verhältnis des mittleren Erhebungsscheiteldrucks (Pb) zu dem mittleren Vertiefungsgrunddruck (Pc) größer als oder gleich 1,5, vorzugsweise größer als oder gleich 2,0 und bevorzugter größer als oder gleich 2,5 ist.

5. Reifen (10) nach einem der vorhergehenden Ansprüche, wobei das Verhältnis des mittleren Erhebungsscheiteldrucks (Pb) zu dem mittleren Vertiefungsgrunddruck (Pc) kleiner als oder gleich 14,0, vorzugsweise kleiner als oder gleich 10,0 und bevorzugter kleiner als oder gleich 7,0 ist.

6. Reifen (10) nach einem der vorhergehenden Ansprüche, wobei sich jede Vertiefung (26) der Vielzahl von Vertiefungen des durchgehend glatten Teils (20) und jede Erhebung (28) der Vielzahl von Erhebungen des durchgehend glatten Teils (20) axial über mindestens 50 %, vorzugsweise mindestens 80 % und bevorzugter mindestens 90 % der axialen Breite (L) des durchgehend glatten Teils (20) erstreckt.

7. Reifen (10) nach einem der vorhergehenden Ansprüche, wobei die Vertiefungen (26) der Vielzahl von Vertiefungen gemäß mindestens einem sich wiederholenden Muster von Vertiefungen über mindestens einen Abschnitt des durchgehend glatten Teils (20) verteilt sind und/oder die Erhebungen (28) der Vielzahl von Erhebungen gemäß mindestens einem sich wiederholenden Muster von Erhebungen über mindestens einen Abschnitt des durchgehend glatten Teils (20) verteilt sind.

8. Reifen (10) nach einem der vorhergehenden Ansprüche, wobei die Vertiefungen (26) der Vielzahl von Vertiefungen und die Erhebungen (28) der Vielzahl von Erhebungen gemäß einem einzigen gemeinsamen sich wiederholenden Muster über mindestens einen Abschnitt des durchgehend glatten Teils (20) verteilt sind.

9. Reifen (10) nach einem der vorhergehenden Ansprüche, wobei die Vertiefungen (26) der Vielzahl von Vertiefungen und die Erhebungen (28) der Vielzahl von Erhebungen so angeordnet sind, dass sie mindestens einen gewellten Abschnitt (34) des durchgehend glatten Teils (20) bilden.

10. Reifen (10) nach den Ansprüchen 8 und 9 in Kombination, wobei der oder jeder gewellte Abschnitt (34) mindestens eine sich wiederholende Wellung (36) der durchgehend glatten Oberfläche (20) beinhaltet, wobei die oder jede sich wiederholende Wellung (36) entlang einer Hauptrichtung (D, D1, D2) ausgerichtet ist, die zu der Translationsrichtung einer Vertiefung (26) zur nächsten der Vielzahl von Vertiefungen des gewellten Abschnitts (34) oder zu der Translationsrichtung einer Erhebung (28) zur nächsten der Vielzahl von Erhebungen des gewellten Abschnitts (34), die gemäß dem gemeinsamen sich wiederholenden Muster verteilt sind, im Wesentlichen parallel ist.

11. Reifen (10) nach dem vorhergehenden Anspruch, wobei die Hauptrichtung (D, D1, D2) der oder jeder sich wiederholenden Wellung (36) im Wesentlichen geradlinig ist, wobei die Hauptrichtung (D, D1, D2) der oder jeder sich wiederholenden Wellung (36) mit der axialen Richtung (Y) des Reifens (10) einen Winkel (A) größer als oder gleich 45°, vorzugsweise größer als oder gleich 80°, bildet.

12. Verwendung, im Rennsport oder beim freien Fahren auf einer Rennstrecke, auf Asphaltboden, eines Reifens (10) für ein Kraftfahrzeug oder ein Motorrad, der eine Lauffläche (16) beinhaltet, die einen oder mehrere durchgehend glatte Teile (20) beinhaltet, wobei der oder jeder durchgehend glatte Teil (20) Folgendes beinhaltet:
- eine Vielzahl von Vertiefungen (26), wobei jede Vertiefung (26) der Vielzahl von Vertiefungen einen Vertiefungsgrund (30) beinhaltet,
- eine Vielzahl von Erhebungen (28), wobei jede Erhebung (28) der Vielzahl von Erhebungen einen Erhebungsscheitel (32) beinhaltet,
die Vertiefungen (26) der Vielzahl von Vertiefungen und die Erhebungen (28) der Vielzahl von Erhebungen so angeordnet sind, dass, wenn der oder jeder durchgehend glatte Teil (20) auf einem Boden rollt, der mittlere Erhebungsscheiteldruck (Pb), der durch den Boden im Mittel auf die Scheitel (32) der Erhebungen (28) der Vielzahl von Erhebungen ausgeübt wird, strikt größer ist als der mittlere Vertiefungsgrunddruck (Pc), der durch den Boden im Mittel auf die Gründe (30) der Vertiefungen (26) der Vielzahl von Vertiefungen ausgeübt wird, wobei der mittlere Vertiefungsgrunddruck (Pc) ungleich Null ist,
wobei der Druck, der durch den Boden auf jede Vertiefung (26) der Vielzahl von Vertiefungen und auf jede Erhebung (28) der Vielzahl von Erhebungen ausgeübt wird, in dem Kontaktbereich des oder jedes durchgehend glatten Teils (20) des Reifens (10) gemessen wird, während der Reifen (10) mit einer Geschwindigkeit von 100 mm/s und mit einem Schräglauf- und einem Sturzwinkel von im Wesentlichen Null rollt,
- wobei der Reifen (10), im Fall eines Reifens (10) für ein Kraftfahrzeug, auf einen Referenzdruck von 1,6 bar aufgepumpt ist und einer Referenzlast von 5000 N ausgesetzt ist,
- wobei der Reifen (10), im Fall eines Reifens (10) für ein Motorrad, auf einen Referenzdruck von 1,8 bar aufgepumpt ist und einer Referenzlast von 1500 N ausgesetzt ist.

13. Form (50) zur Herstellung eines Reifens (10) nach einem der Ansprüche 1 bis 11, beinhaltend eine Formungsoberfläche (52) für die Lauffläche (16), die einen durchgehend glatten Formungsteil (54) für den oder jeden durchgehend glatten Teil (20) der Lauffläche (16) beinhaltet, wobei der oder jeder durchgehend glatte Formungsteil (54) Folgendes beinhaltet:
- eine Vielzahl von Vertiefungen (58) zum Formen der Erhebungen (28) der Vielzahl von Erhebungen des durchgehend glatten Teils (20) der Lauffläche (16) und
- eine Vielzahl von Erhebungen (60) zum Formen der Vertiefungen (26) der Vielzahl von Vertiefungen des durchgehend glatten Teils (20) der Lauffläche (16).

14. Form (50) nach dem vorhergehenden Anspruch, beinhaltend eine Vielzahl von Elementen zum Entlüften (66), aus der Form heraus, der Luft, die, wenn sich der Reifen (10) in der Form (50) befindet, zwischen der Formungsoberfläche (52) und der Lauffläche (16) eingeschlossen ist, jedes Entlüftungselement (64) mindestens eines Teils der Entlüftungselemente (66) mündet radial in einer der Formungsvertiefungen (58).

15. Form (50) nach dem vorhergehenden Anspruch, wobei jede Formungsvertiefung (58) mindestens ein Entlüftungselement (64) mindestens eines Teils der Entlüftungselemente (66) aufweist, das in der Formungsvertiefung (58) mündet.

## Claims

1. Tyre (10) for a motor car or a motorbike for use on an asphalted surface, comprising a tread surface (16) comprising one or more continuously-smooth part(s) (20), the or each continuously-smooth part (20) comprises:
- a plurality of recessed portions (26), each recessed portion (26) of the plurality of recessed portions comprising a recessed-portion bottom (30),
- a plurality of raised portions (28), each raised portion (28) of the plurality of raised portions comprising a raised-portion top (32),
**characterized in that** the recessed portions (26) of the pluralities of recessed portions and the raised portions (28) of the plurality of raised portions are arranged in such a way that, when the or each continuously-smooth part (20) rolls along a surface, the mean top-of-raised-portion pressure (Pb) exerted on average by that surface on the tops (32) of the raised portions (28) of the plurality of raised portions is strictly greater than the mean bottom-of-recessed-portion pressure (Pc) exerted on average by that surface on the bottoms (30) of the recessed portions (26) of the plurality of recessed portions, the mean bottom-of-recessed-portion pressure (Pc) being nonzero,
the pressure exerted by that surface on each recessed portion (26) of the plurality of recessed portions and on each raised portion (28) of the plurality of raised portions being measured in the contact patch of the or each continuously-smooth part (20) of the tyre (10), the tyre (10) running at a speed equal to 100 mm/sec with substantially zero slip and camber angles,
- the tyre (10) being inflated to a reference pressure equal to 1.6 bar, and subjected to a reference load equal to 5000 N in the case of a car tyre (10),
- the tyre (10) being inflated to a reference pressure equal to 1.8 bar, and subjected to a reference load equal to 1500 N in the case of a motorbike tyre (10).

2. Tyre (10) according to the preceding claim, wherein the or each continuously-smooth part (20) forms, on the surface, at least 10%, preferably at least 20%, more preferentially at least 30% and more preferentially still at least 40% of the tread surface (16).

3. Tyre (10) according to either one of the preceding claims, wherein the continuously-smooth part or the collection of continuously-smooth parts forms, on the surface, at least 80%, preferably at least 90%, and more preferentially at least 95% of the tread surface (16).

4. Tyre (10) according to any one of the preceding claims, wherein the ratio of the mean top-of-raised-portion pressure (Pb) to the mean bottom-of-recessed-portion pressure (Pc) is greater than or equal to 1.5, preferably greater than or equal to 2.0 and more preferentially greater than or equal to 2.5.

5. Tyre (10) according to any one of the preceding claims, wherein the ratio of the mean top-of-raised-portion pressure (Pb) to the mean bottom-of-recessed-portion pressure (Pc) is less than or equal to 14.0, preferably less than or equal to 10.0 and more preferentially less than or equal to 7.0.

6. Tyre (10) according to any one of the preceding claims, wherein each recessed portion (26) of the plurality of recessed portions of said continuously-smooth part (20) and each raised portion (28) of the plurality of raised portions of said continuously-smooth part (20) extends axially over at least 50%, preferably at least 80%, and more preferentially at least 90% of the axial width (L) of said continuously-smooth part (20).

7. Tyre (10) according to any one of the preceding claims, wherein the recessed portions (26) of the plurality of recessed portions are distributed in at least one repeating pattern of recessed portions over at least a portion of said continuously-smooth part (20) and/or the raised portions (28) of the plurality of raised portions are distributed in at least one repeating pattern of raised portions over at least a portion of said continuously-smooth part (20).

8. Tyre (10) according to any one of the preceding claims, wherein the recessed portions (26) of the plurality of recessed portions and the raised portions (28) of the plurality of raised portions are distributed in a single common repeating pattern over at least a portion of said continuously-smooth part (20).

9. Tyre (10) according to any one of the preceding claims, wherein the recessed portions (26) of the plurality of recessed portions and the raised portions (28) of the plurality of raised portions are arranged in such a way as to form at least one undulating portion (34) of said continuously-smooth part (20).

10. Tyre (10) according to Claims 8 and 9 considered in combination, wherein the or each undulating portion (34) comprises at least one repeating undulation (36) of said continuously-smooth surface (20), the or each repeating undulation (36) being oriented in a main direction (D, D1, D2) substantially parallel to the direction of translation from one recessed portion (26) to another of the plurality of recessed portions of the undulating portion (34), or to the direction of translation from one raised portion (28) to another of the plurality of raised portions of the undulating portion (34), these recessed/raised portions being distributed in the common repeating pattern.

11. Tyre (10) according to the preceding claim, wherein, with the main direction (D, D1, D2) of the or each repeating undulation (36) being substantially rectilinear, the main direction (D, D1, D2) of the or each repeating undulation (36) makes an angle (A) greater than or equal to 45°, preferably greater than or equal to 80° with the axial direction (Y) of the tyre (10).

12. Use, in competition or free running on a racetrack, on an asphalted surface, of a motorcar or motorbike tyre (10) comprising a tread surface (16) comprising one or more continuously-smooth part(s) (20); the or each continuously-smooth part (20) comprises:
- a plurality of recessed portions (26), each recessed portion (26) of the plurality of recessed portions comprising a recessed-portion bottom (30),
- a plurality of raised portions (28), each raised portion (28) of the plurality of raised portions comprising a raised-portion top (32),
the recessed portions (26) of the pluralities of recessed portions and the raised portions (28) of the plurality of raised portions are arranged in such a way that, when the or each continuously-smooth part (20) rolls along a surface, the mean top-of-raised-portion pressure (Pb) exerted on average by that surface on the tops (32) of the raised portions (28) of the plurality of raised portions is strictly greater than the mean bottom-of-recessed-portion pressure (Pc) exerted on average by that surface on the bottoms (30) of the recessed portions (26) of the plurality of recessed portions, the mean bottom-of-recessed-portion pressure (Pc) being nonzero,
the pressure exerted by that surface on each recessed portion (26) of the plurality of recessed portions and on each raised portion (26) of the plurality of raised portions being measured in the contact patch of the or each continuously-smooth part (20) of the tyre (10), the tyre (10) running at a speed equal to 100 mm/sec with substantially zero slip and camber angles,
- the tyre (10) being inflated to a reference pressure equal to 1.6 bar, and subjected to a reference load equal to 5000 N in the case of a car tyre (10),
- the tyre (10) being inflated to a reference pressure equal to 1.8 bar, and subjected to a reference load equal to 1500 N in the case of a motorbike tyre (10).

13. Mould (50) for manufacturing a tyre (10) according to any one of Claims 1 to 11, comprising a moulding surface (52) for moulding the tread surface (16) comprising a continuously-smooth moulding part (54) for moulding the or each continuously-smooth part (20) of the tread surface (16); the or each continuously-smooth moulding part (54) comprises:
- a plurality of recesses (58) for moulding the raised portions (28) of the plurality of raised portions of said continuously-smooth part (20) of the tread surface (16), and
- a plurality of raised portions (60) for moulding the recessed portions (26) of the plurality of recessed portions of said continuously-smooth part (20) of the tread surface (16).

14. Mould (50) according to the preceding claim, comprising a plurality of venting elements (66) for venting from the mould any air that is trapped between the moulding surface (52) and the tread surface (16) when the tyre (10) is in the mould (50), each venting element (64) of at least part of the venting elements (66) opens radially into one of the moulding recesses (58).

15. Mould (50) according to the preceding claim, wherein each moulding recess (58) has at least one venting element (64) of at least part of the venting elements (66) opening into said moulding recess (58).
